# EUROPEAN PATENT APPLICATION

(11) **EP 4 538 925 A1**
(43) Date of publication of application: **16.04.2025**
(21) Application number: 24205843.6
(22) Date of filing: 10.10.2024
(51) Int. Cl.: G06F 30/392, G06F 119/06, G06F 115/02

(54) **SEMICONDUCTOR INTEGRATED CIRCUIT AND LAYOUT DESIGN METHOD OF THE SAME**

(30) Priority: 13.10.2023 KR 20230137030
(71) Applicant: Samsung Electronics Co., Ltd, Suwon-si, Gyeonggi-do 16677 (KR)
(72) Inventor: CHOI, Yunho, 16677 Suwon-si (KR); SONG, Junhyeok, 16677 Suwon-si (KR); LEE, Junhuck, 16677 Suwon-si (KR); CHOI, Jaegyeong, 16677 Suwon-si (KR)
(74) Representative: Marks & Clerk LLP

(57) **Abstract**

A layout design method includes receiving input data defining a semiconductor integrated circuit, performing an arrangement operation and a routing operation based on the input data to obtain a first layout of the semiconductor integrated circuit including plural blocks, setting, on the first layout, a first switch area in which first switches are to be arranged, and arranging the first switches in the first switch area, and arranging second switches in a second switch area that is different from the first switch area to obtain a second layout of the semiconductor integrated circuit.

## Description

### BACKGROUND

Devices, apparatuses, and method consistent with the present disclosure relate to a semiconductor integrated circuit and a layout design method of the semiconductor integrated circuit and, more particularly, to a semiconductor integrated circuit and a layout design method of a semiconductor integrated circuit capable of reducing an inrush current.

Semiconductor devices are manufactured by patterning devices and their interconnections on a substrate such as a semiconductor wafer. A semiconductor device may be fabricated by designing an integrated circuit by using electronic design automation (EDA), which assists a designer to arrange various constituent components of a circuit to function and connect the various constituent components to each other. In other words, a layout designer may generate a layout of a semiconductor device by using the EDA.

The layout of the semiconductor device may include circuit constituent components, connection wiring, physical locations, and sizes of various layers. The semiconductor device may be fabricated by verifying the layout of the semiconductor device and transferring the verified layout onto a semiconductor substrate.

### SUMMARY

It is an aspect to provide a layout design method of a semiconductor integrated circuit capable of reducing inrush current.

According to an aspect of one or more embodiments, there is provided a layout design method comprising receiving input data defining a semiconductor integrated circuit; performing an arrangement operation and a routing operation based on the input data to obtain a first layout of the semiconductor integrated circuit including a plurality of blocks; setting, on the first layout, a first switch area in which a plurality of first switches are to be arranged; and arranging the plurality of first switches in the first switch area, and arranging a plurality of second switches in a second switch area that is different from the first switch area to obtain a second layout of the semiconductor integrated circuit.

According to another aspect of one or more embodiments, there is provided a semiconductor integrated circuit comprising a power management integrated circuit (PMIC) configured to generate power; and a system on chip (SoC) configured to operate according to the power from the PMIC. The SoC comprises an element area in which a macro block and a memory block are arranged; and a logic circuit area in which a plurality of switches are arranged, the plurality of switches capable of controlling power that is applied to the macro block and the memory block. The logic circuit area comprises a first switch area in which a plurality of first switches are arranged for reducing inrush current applied to the element area; and a second switch area in which a plurality of second switches are arranged, the plurality of second switches controlling all power applied to the element area. The first switch area is arranged in an area of the SoC except for a first edge area, a second edge area, a third edge area, and a fourth edge area of the SoC.

According to yet another aspect of one or more embodiments, there is provided a semiconductor integrated circuit comprising a power management integrated circuit (PMIC) configured to generate power; and a system on chip (SoC) configured to operate according to the power from the PMIC. The SoC comprises a first switch area including a plurality of first switches which receive a first signal from the PMIC and are turned on based on the first signal; and a second switch area including a plurality of second switches which receive a second signal from the PMIC and are turned on based on the second signal. The first switch area and the second switch area are arranged in an area of the SoC that does not interfere with a macro block and a memory block on the SoC, and the first switch area is arranged in an area of the SoC except for a first edge area, a second edge area, a third edge area, and a fourth edge area of the SoC.

At least some of the above and other features of the invention are set out in the claims.

### BRIEF DESCRIPTION OF THE DRAWINGS

Various embodiments will be more clearly understood from the following detailed description taken in conjunction with the accompanying drawings, in which:
FIG. 1 is a flowchart of a layout design method of a semiconductor integrated circuit, according to an embodiment;
FIGS. 2A and 2B are flowcharts of a layout design method of a semiconductor integrated circuit, according to embodiments;
FIG. 3 is a diagram for describing a signal transmission/reception between a system-on-chip (SOC) and a power management integrated circuit (PMIC), according to an embodiment;
FIG. 4 is a diagram illustrating a configuration of a semiconductor integrated circuit, according to an embodiment;
FIG. 5 is a diagram illustrating a configuration of a semiconductor integrated circuit, according to an embodiment;
FIG. 6 is a diagram illustrating a configuration of a semiconductor integrated circuit, according to an embodiment;
FIG. 7 is a diagram illustrating a configuration of a semiconductor integrated circuit, according to an embodiment;
FIGS. 8A, 8B, and 8C are diagrams illustrating configurations of semiconductor integrated circuits, according to comparative examples and an embodiment;
FIG. 9 illustrates a graph for describing current changes in a semiconductor integrated circuit, according to comparative examples and an embodiment;
FIGS. 10 and 11 are block diagrams of design systems of semiconductor integrated circuits, according to embodiments;
FIG. 12 is a block diagram illustrating a system on chip (SoC) according to an embodiment;
FIG. 13 is a flowchart illustrating a method of fabricating an integrated circuit (IC), according to an embodiment; and
FIG. 14 is a detailed flowchart illustrating layout design operations, according to an embodiment.

### DETAILED DESCRIPTION

Hereinafter, various embodiments are described in conjunction with the accompanying drawings.

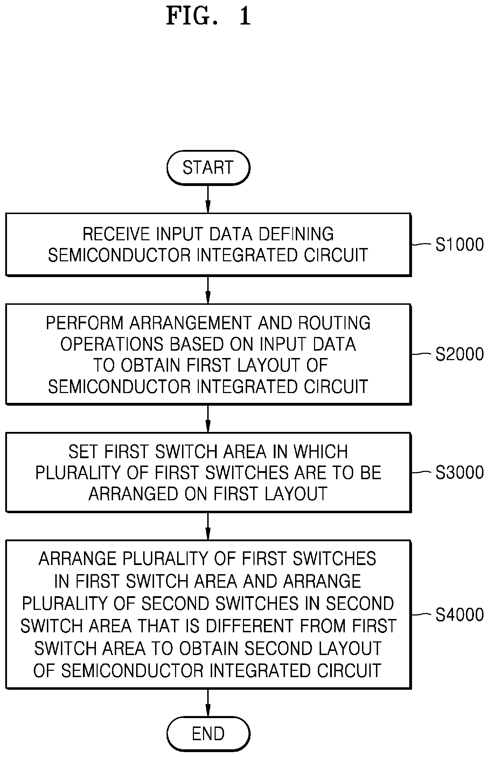

FIG. 1 is a flowchart of a layout design method of a semiconductor integrated circuit, according to an embodiment.

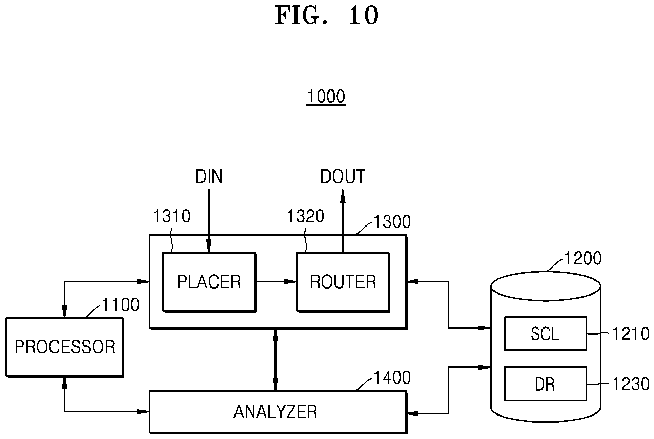

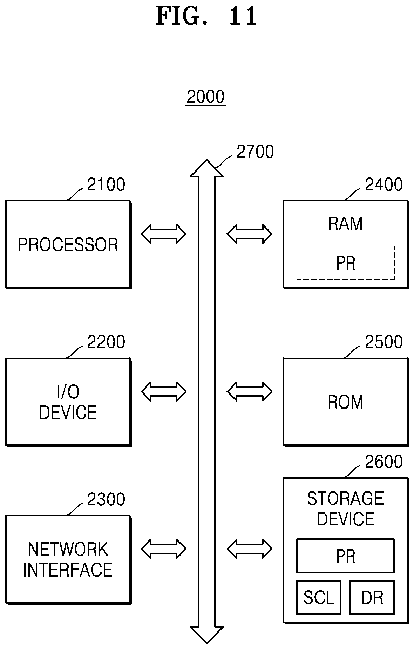

Referring to FIG. 1, the layout design method of a semiconductor integrated circuit according to an embodiment may be performed in the design process of a semiconductor integrated circuit, and may be performed on a system and/or a tool for designing a semiconductor integrated circuit. In an embodiment, the system and/or the tool may include a program including a plurality of instructions executed by a processor. The system and/or the tool are described below with reference to FIGS. 10 and 11.

In the method of designing a layout of a semiconductor integrated circuit, input data defining the semiconductor integrated circuit may be received (operation S1000). In some embodiments, the input data may define a semiconductor device. In some embodiments, the input data may define a semiconductor chip. For example, the input data may correspond to a first layout of operation S2000.

The input data may include data generated from an abstract form of the behavior of a semiconductor integrated circuit, for example, data generated by synthesizing using data defined on a register transfer level (RTL). For example, the input data may include a bitstream or netlist generated by synthesizing a semiconductor integrated circuit defined by a hardware description language (HDL), such as very-high-speed integrated circuit (VHSIC) HDL (VHDL) and Verilog.

In some embodiments, the input data may include data defining a layout of a semiconductor integrated circuit. For example, the input data may include geometric information defining a structure implemented by using a semiconductor material, a metal, an insulator, etc. The layout of the semiconductor integrated circuit represented by the input data may include a layout of cells, and may include conductive lines connecting the cells to each other.

Placement & routing (P&R) may be performed based on the input data to obtain a first layout of the semiconductor integrated circuit (operation S2000). The first layout may include a plurality of blocks, a plurality of standard cells, a plurality of power wirings, a plurality of ground wirings, a plurality of clock wirings, and a plurality of signal wirings.

A first switch area, in which a plurality of first switches are to be arranged, may be set on the first layout (operation S3000). For example, the first switch area may include an area in which a macro element, a memory element, or the like are not arranged, in the first layout. In an embodiment, the first switch area may be set for a partial area of the semiconductor integrated circuit. In other words, the first switch area may be set in units of semiconductor integrated circuits. According to some embodiments, by setting the first switch area arranged in a certain area of the semiconductor integrated circuit, an inrush current may be reduced.

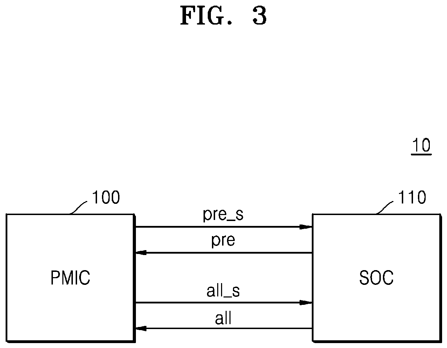

The plurality of first switches may be arranged in the first switch area, and a plurality of second switches may be arranged in a second switch area that is different from the first switch area to obtain a second layout of the semiconductor integrated circuit (operation S4000). According to an embodiment, the first layout may include a layout before a first switch area and a second switch area are arranged, and the second layout may include a layout after the first switch area and the second switch area are arranged. According to an embodiment, the first switch area may include an area configured to primarily apply power to a portion of a plurality of blocks, and the second switch area may include an area configured to apply power to a remainder of the plurality of blocks. A detailed description of the first switch area and the second switch area is given below with reference to FIG. 3 and below.

According to an embodiment, operations S3000 and S4000 may be sequentially performed. After operation S4000 is performed, output data defining the semiconductor integrated circuit may be generated and provided. For example, the output data may correspond to the second layout in operation S4000.

In an embodiment, when the received input data is data, such as a bitstream and a netlist, generated by synthesizing the semiconductor integrated circuit, the output data may be a bitstream or a netlist. In an embodiment, when the received input data is data defining the layout of a semiconductor integrated circuit having a graphic data system II (GDSII) format, the format of the output data may also be data defining the layout of the semiconductor integrated circuit.

In an embodiment, the operations described above may be performed by designing the semiconductor integrated circuit by using a design tool. For example, the tool described above may be a Fusion compiler tool of the Synopsys company and/or an Innovus tool of the Cadence company, but embodiments are not limited thereto. In an embodiment, the semiconductor integrated circuit may be a system-on-chip (SoC). However, embodiments are not limited thereto.

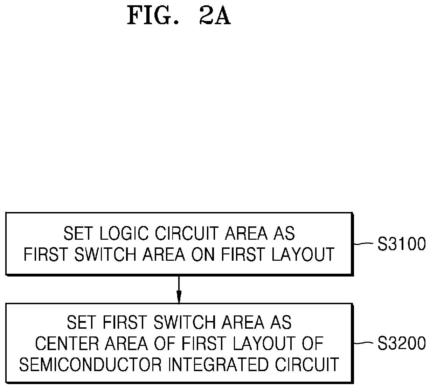

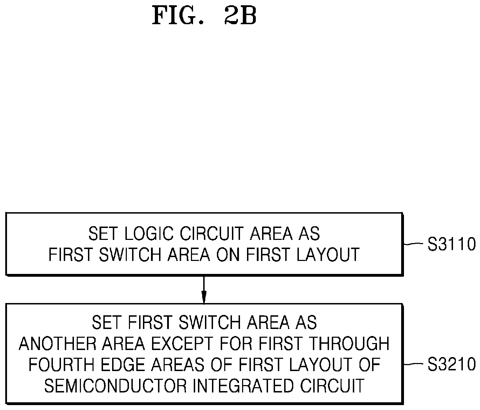

FIGS. 2A and 2B are flowcharts of a layout design method of a semiconductor integrated circuit, according to embodiments. According to an embodiment, the operations described with reference to FIGS. 2A and 2B may be constituent operations included in operation S3000 in FIG. 1.

Referring to FIG. 2A, in operation S3100, a logic circuit area may be set as the first switch area on the first layout. The logic circuit area may mean a remaining area in which an element area is not arranged on the layout. The element area may mean an area in which blocks, such as a macro element and a memory element, are arranged. According to an embodiment, the first switch area may be set to any one portion of the logic circuit area. In operation S3200, the first switch area may be set as a center area of the first layout of the semiconductor integrated circuit among a plurality of logic circuit areas. In other words, in some embodiments, the first switch area may be set as the center area as opposed to edge areas of the first layout. In some embodiments, the first switch area may be set as the center area avoiding the edge areas of the first layout.

Referring to FIG. 2B, in operation S3110, the logic circuit area may be set as the first switch area on the first layout. According to an embodiment, the first switch area may be set to any one portion of the logic circuit area. In operation S3210, the first switch area may be set as another area except for a first edge area, a second edge area, a third edge area, or a fourth edge area on the first layout of the semiconductor integrated circuit among a plurality of logic circuit areas.

According to various embodiments, by setting the first switch area close to the center area rather than the edge areas on the first layout, the inrush current may be reduced. The inrush current may mean a current greater than a rated current temporarily applied to a semiconductor integrated circuit when power is applied to the semiconductor integrated circuit. According to various embodiments, the inrush current may be reduced by allowing power to spread over a wider range, by arranging the first switch area close to the center area. The arrangement structure of the first switch area is described in more detail with reference to the diagrams below.

FIG. 3 is a diagram for describing a signal transmission/reception between the SoC and a power management integrated circuit (PMIC), according to an embodiment.

Referring to FIG. 3, a semiconductor device 10 may be implemented as a portable electronic device.

The portable electronic device may be implemented as a laptop computer, a mobile phone, a smartphone, a tablet personal computer (PC), a personal digital assistant (PDA), an enterprise digital assistant (EDA), a digital still camera, a digital video camera, a portable multimedia player (PMP), a personal navigation device or portable navigation device (PND), a handheld game console, or an e-book. In some embodiments, the semiconductor device 10 may have a concept including a semiconductor integrated circuit.

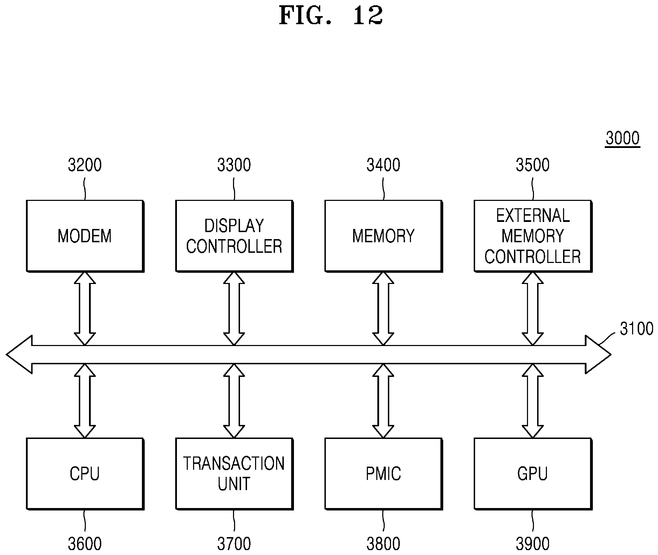

The semiconductor device 10 may include a system on a chip (SoC) 200 and a power management integrated circuit (PMIC) 100. According to an embodiment, the SoC 110 in FIG. 3 may not include the PMIC 100 and the PMIC 100 may be implemented separately from the SoC 110, unlike the SoC 3000 illustrated in FIG. 12 to be described below which incorporates a PMIC as a power management unit. Referring to FIG. 3, the total power of the SoC 110 may be controlled by a separate voltage management circuit implemented outside the SoC 110, for example, by the PMIC 100.

According to an embodiment, the SoC 110 may receive a first signal pre_s from the PMIC 100. When the first signal pre_s is received, the plurality of first switches included in the first switch area included in the SoC 110 may be turned on. When the plurality of first switches are completely turned on, a first completion signal pre indicating that the plurality of first switches are completely turned-on may be transmitted to the PMIC 100.

According to an embodiment, the SoC 110 may receive a second signal all_s from the PMIC 100. When the second signal all_s is received, the plurality of second switches included in the second switch area included in the SoC 110 may be turned on. When the plurality of second switches are completely turned-on, a second completion signal all indicating that the plurality of second switches are completely turned-on may be transmitted to the PMIC 100.

According to an embodiment, a number of first switches may be less than a number of second switches. According to an embodiment, the second switch may correspond to all switches capable of applying power to all blocks included in the SoC 110.

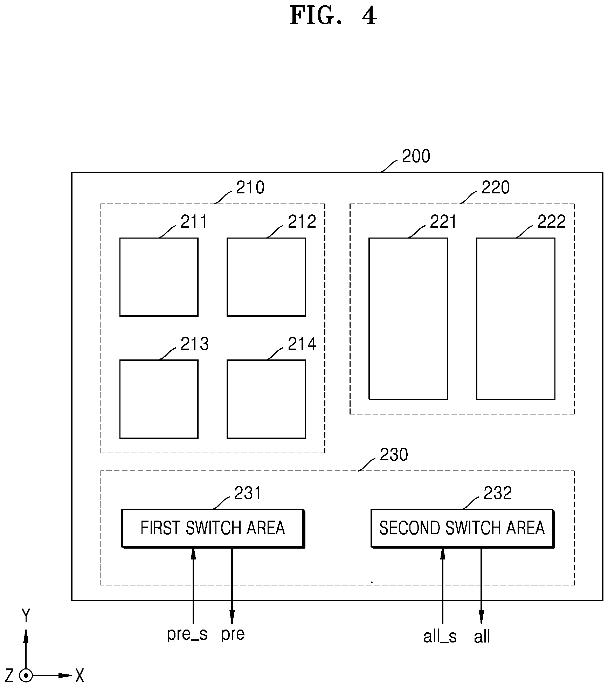

Referring to FIG. 3, the SoC 110 according to various embodiments may include the first switch area and the second switch area, and each of the first switch area and the second switch area may be controlled to turn on a plurality of switches included, respectively, in the switch area in response to a first signal and a second signal, respectively. By turning on the plurality of first switches included in the first switch area initially (i.e., first) and applying power to the first switch area, the SoC 110 according to various embodiments may reduce the inrush current generated by abruptly applying power. By adjusting an arrangement location of the first switch area, the inrush current may be additionally reduced. Detailed descriptions of the arrangement location of the first switch area are given below with reference to FIG. 4 and below. According to various embodiments, in a power gating design, to reduce an inrush peak current, power may be controlled by using a dual switch configuration including the first switch and the second switch. FIGS. 4 to 7 below describe the SoC 110 of FIG. 3 in more detail.

FIG. 4 is a diagram illustrating a configuration of a semiconductor integrated circuit 200, according to an embodiment.

Referring to FIG. 4, the semiconductor integrated circuit 200 may include a plurality of blocks 210 and 220 and a switch area 230. The plurality of blocks 210 and 220 may be referred to as functional blocks or intellectual properties (IPs). For example, the plurality of blocks 210 and 220 may include macro blocks for data processing and/or operation and memory blocks for data storage.

The plurality of blocks 210 and 220 may include a plurality of standard cells. A standard cell represents a unit of an integrated circuit having a size of a layout satisfying preset rules and a preset function. For example, in some embodiments, the block 210 may include four standard cells 211-214, and the block 220 may include two standard cells 221-222, as illustrated in the example of FIG. 4.

The function and operation of the semiconductor integrated circuit 200 may be implemented by the plurality of blocks 210 and 220 included in the semiconductor integrated circuit 200 and/or the plurality of standard cells 211-214 and 221-222. In other words, the plurality of blocks 210 and 220 and/or the plurality of standard cells 211-214 and 221-222 may represent a predefined logic circuit block to be implemented in the semiconductor integrated circuit 200, and in some cases, the functions thereof may be parameterized. Although not illustrated, each of the plurality of blocks 210 and 220 and/or each of the plurality of standard cells 211-214 and 221-222 may include a plurality of elements for implementing functions and operations of the semiconductor integrated circuit 200. For example, the plurality of elements may include an active element, a passive element, an analog element, a digital element, a logic element, etc. Although not illustrated, the plurality of blocks 210 and 220 and/or the plurality of standard cells 211-214 and 221-222 may be formed on a semiconductor substrate.

For convenience, only blocks 210 and 220 are illustrated in FIG. 4, but embodiments are not limited thereto, and the number of blocks and the standard cells included in the semiconductor integrated circuit 200 may be variously changed according to various embodiments. In other words, two blocks 210 and 220 with block 210 having standard cells 211-214 and block 2220 having standard cells 221-222 are illustrated in FIG. 4. However, in some embodiments, more than two blocks may be provided and more than two or more than four standard cells may be provided.

The switch area 230 may include a first switch area 231 and a second switch area 232. The first switch area 231 may include a plurality of first switches. The second switch area 232 may include a plurality of second switches. In some embodiments, the number of first switches may be less than the number of second switches.

According to an embodiment, the plurality of first switches included in the first switch area 231 may be switches configured to be turned on by the first signal pre_s. The plurality of second switches included in the second switch area 232 may be switches configured to be turned on by the second signal all_s. Each of the first switch area 231 and the second switch area 232 may be arranged in a logic circuit area where the plurality of blocks 210 and 220 are not arranged. According to various embodiments, an area, in which the first switch area 231 is to be arranged, may be preset, and by arranging the first switch area 231 in the preset area, the inrush current may be prevented.

The inrush current may be generated when a power rail arranged in an X-axis direction is interfered with by the blocks already arranged, and the power is not supplied properly, but according to various embodiments, this issue may be improved by arranging the first switch area in a center area.

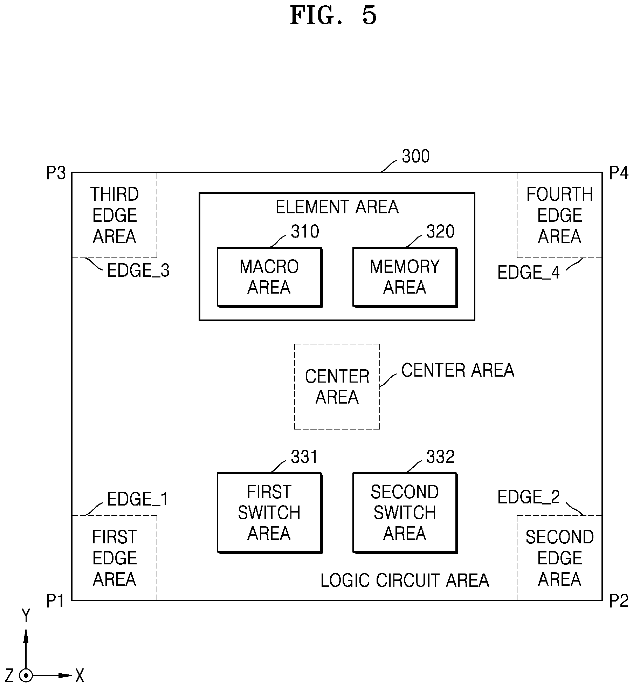

FIG. 5 is a diagram illustrating a configuration of a semiconductor integrated circuit 300, according to an embodiment.

Referring to FIG. 5, the semiconductor integrated circuit 300 may include a macro area 310, a memory area 320, a first switch area 331, and a second switch area 332. The semiconductor integrated circuit 300 may further include supplementary constituent elements such as a power line, but the supplementary constituent elements are omitted from FIG. 5 for convenience of descriptions and for conciseness.

Referring to FIG. 5, an area, in which the macro area 310 and the memory area 320 are arranged, may include an element area. A macro block may be arranged in the macro area 310, and a memory block may be arranged in the memory area 320. Referring to FIG. 5, the other area of the semiconductor integrated circuit 300 except for the element area may include a logic circuit area. In other words, in some embodiments, the logic area may be defined as any area of the semiconductor integrated circuit 300 except for the element area. In the logic circuit area, the first switch area 331 and the second switch area 332 may be arranged. In the logic circuit area, a plurality of switches capable of controlling power applied to the macro area 310 and the memory area 320 may be arranged.

Referring to FIG. 5, the semiconductor integrated circuit 300 may be provided in a rectangular shape. According to an embodiment, the block diagram of FIG. 5 may be an upper surface diagram viewed in a Z-axis direction. The semiconductor integrated circuit 300 may include a first edge area edge_1, a second edge area edge_2, a third edge area edge_3, and a fourth edge area edge_4 corresponding to each of a first vertex (corner) P1, a second vertex P2, a third vertex P3, and a fourth vertex P4. According to an embodiment, an area corresponding to the first vertex P1 may be the first edge area edge_1, an area corresponding to the second vertex P2 may be the second edge area edge_2, an area corresponding to the third vertex P3 may be the third edge area edge_3, and an area corresponding to the fourth vertex P4 may be the fourth edge area edge_4.

According to an embodiment, the first edge area edge_1 may mean an area adjacent to a portion corresponding to the first vertex P1 of the semiconductor integrated circuit 300. The second edge area edge_2 may mean an area adjacent to a portion corresponding to the second vertex P2 of the semiconductor integrated circuit 300. The third edge area edge_3 may mean an area adjacent to a portion corresponding to the third vertex P3 of the semiconductor integrated circuit 300. The fourth edge area edge_4 may mean an area adjacent to a portion corresponding to the fourth vertex P4 of the semiconductor integrated circuit 300. According to an embodiment, an area adjacent to a portion corresponding to an n^{th} vertex may mean an area in the semiconductor integrated circuit 300, which is located within a certain distance from the n^{th} vertex as a reference. According to an embodiment, the certain distance may mean a distance corresponding to about 1/10 of an edge length of the semiconductor integrated circuit 300. In other words, for example, the first edge area edge_1 may be an area formed by a first length from the first vertex P1 in the X direction and a second length from the first vertex P1 in the Y direction, and each of the first length and the second length may correspond to the certain distance, e.g., 1/10 of the edge length of the semiconductor integrated circuit 300. Similarly, an n^{th} edge area edge_n may be an area formed by a first length from the n^{th} vertex in the X direction and a second length from the n^{th} vertex in the Y direction, and each of the first length and the second length may correspond to the certain distance. However, the certain distance is not limited thereto and, in some embodiments, the certain distance may be differently determined according to sizes of the macro block and memory block, the number of switches, etc. According to an embodiment, an area of each of the first edge area edge_1, the second edge area edge_2, the third edge area edge_3, and the fourth edge area edge_4 may be the same.

According to an embodiment, the semiconductor integrated circuit 300 may include the center area. In an embodiment, the center area may mean an area in the semiconductor integrated circuit 300, which has a center that is located equidistant from each of the first to fourth vertices P1 to P4 of the semiconductor integrated circuit 300. In an embodiment, the center area may be mean an area in the semiconductor integrated circuit 300, which is located within a certain distance from a right center of the semiconductor integrated circuit 300 as a reference. According to an embodiment, the certain distance may be about 1/2 of the edge length of the semiconductor integrated circuit 300. However, the area is not limited thereto and may be differently determined according to sizes of the macro block and memory block, the number of switches, etc. In an embodiment, the center area may have a first length in the X direction and a second length in the Y direction, where the first and second lengths are each about 1/10 of an edge length of the semiconductor integrated circuit 300. In other words, in some embodiments, an area of the center area may be about the same as an area of one of the edge areas. According to an embodiment, an area size of the center area may be the same as an area size of each of the first edge area edge_1, the second edge area edge_2, the third edge area edge_3, and the fourth edge area edge_4.

According to various embodiments, the first switch area 331 may be arranged in the logic circuit area except for (*i.e.* outside) the first edge area edge_1, the second edge area edge_2, the third edge area edge_3, and the fourth edge area edge_4. According to an embodiment, the first switch area 331 may be arranged more adjacent to the center area, in a range of no interference with the element area. In other words, the first switch area 331 may be arranged to be more adjacent to the center area as long as the first switch area 331 does not interfere with the element area. According to an embodiment, the first switch area 331 may be arranged close to the center area of the semiconductor integrated circuit 300 such that the power is evenly distributed in the center area portion of the semiconductor integrated circuit 300, and thus, the inrush current may be reduced compared with the related art case.

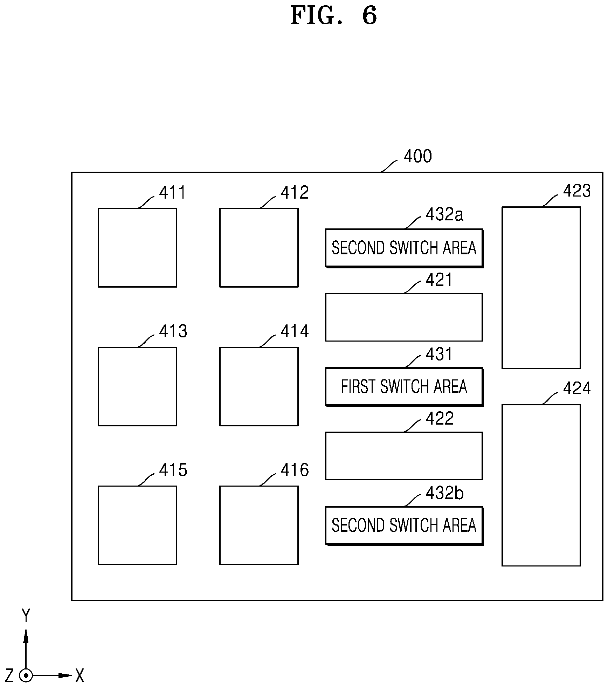

FIG. 6 is a diagram illustrating a configuration of a semiconductor integrated circuit 400, according to an embodiment.

Referring to FIG. 6, the semiconductor integrated circuit 400 may include a plurality of blocks 411 to 416 and 421 to 424, a first switch area 431, and second switch areas 432a and 432b. Referring to FIG. 6, the second switch areas 432a and 432b may be provided in two areas. According to an embodiment, the first switch area 431 and the second switch areas 432a and 432b may also be arranged apart from each other. As illustrated in FIG. 6, the first switch area 431 may be arranged adjacent to the center area of the semiconductor integrated circuit 400.

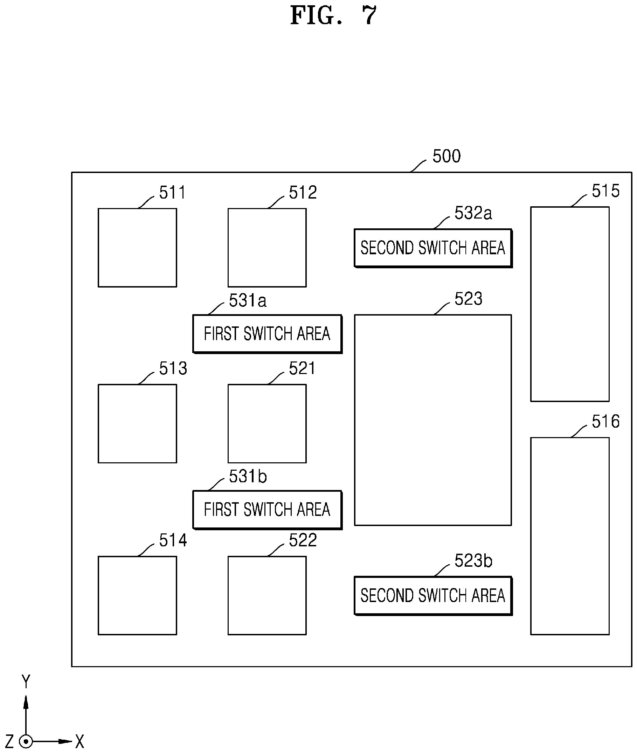

FIG. 7 is a diagram illustrating a configuration of a semiconductor integrated circuit 500, according to an embodiment.

Referring to FIG. 7, the semiconductor integrated circuit 500 may include a plurality of blocks 511 to 516 and 521 to 523, first switch areas 531a and 531b, and second switch areas 532a and 532b. The first switch areas 531a and 531b may be provided in two areas, and the second switch areas 532a and 532b may be provided in two areas. According to an embodiment, the first switch areas 531a and 531b and the second switch areas 532a and 532b may be arranged apart from each other.

When blocks are arranged in the center area of the semiconductor integrated circuit 500, the layout of the blocks may, in some instances, preclude arranging the first switch areas 531a and 531b in the center area of the semiconductor integrated circuit 500. In this case, the first switch areas 531a and 531b may be configured to be arranged in areas adjacent to the center area. In other words, according to an embodiment, the first switch areas 531a and 531b may be arranged in areas closest to the center area among area available in the logic circuit area.

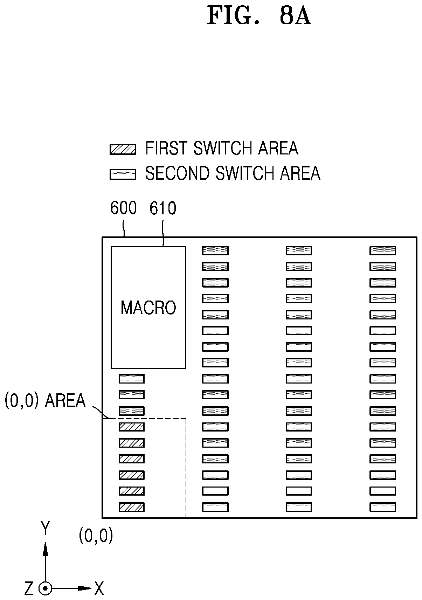

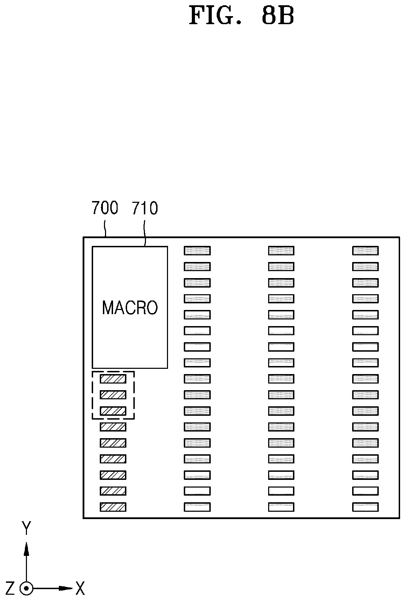

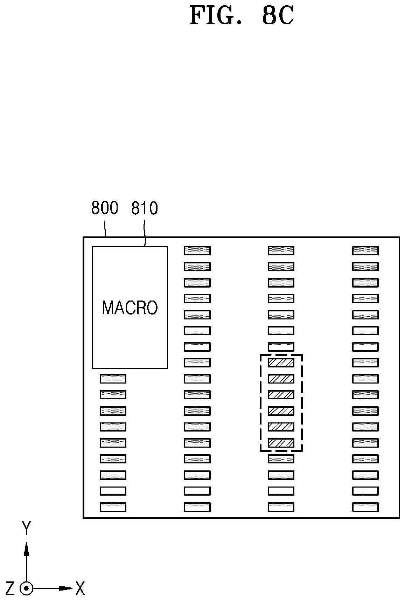

FIGS. 8A, 8B, and 8C are diagrams illustrating configurations of semiconductor integrated circuits 600, 700, and 800, according to comparative examples and an embodiment, respectively.

FIGS. 8A and 8B are diagrams illustrating configurations of semiconductor integrated circuits 600 and 700, in which first switch areas are arranged according to comparative examples, respectively, and FIG. 8C illustrates a semiconductor integrated circuit 800 in which first switch areas are arranged according to various embodiments disclosed herein.

Referring to FIG. 8A, the semiconductor integrated circuit 600 may include a macro area 610. As illustrated in FIG. 8A, when the first switch areas are arranged in the semiconductor integrated circuit 600 according to a comparative example, the first switch areas may be sequentially arranged in an area extending from a coordinate (0,0), where the X-axis direction and a Y-axis direction cross, to form a (0,0) area. The (0,0) area may mean an area located within a certain distance from the (0,0) coordinates, as a reference and extending in the X-axis and Y-axis directions.

Referring to FIG. 8B, the semiconductor integrated circuit 700 may include a macro area 710 that is smaller than the macro area 610 of the semiconductor integrated circuit 600. Compared to the semiconductor integrated circuit 600 shown in FIG. 8A, the semiconductor integrated circuit 700 has an increased number of first switches included in the first switch areas. This is illustrated by the dashed box in FIG. 8B showing additional first switch areas as compared to the example of FIG. 8A. In this case, there may be an issue that the number of first switches is excessive.

In other words, according to comparative examples, without considering arrangement locations of the first switch areas, the first switch areas may be arranged from the (0,0) area on a chip level or a block level in the Y-axis direction in the floor plan operation such that the (0,0) area is increased in the Y-axis direction, and the second switches may be arranged in other areas. The floor plan operation may be an operation of arranging macro blocks and memory blocks in the application-specific integrated circuit (ASIC) design.

Referring to FIG. 8C, by contrast, the semiconductor integrated circuit 800 according to various embodiments may include a macro area 810 which is similar in size to the macro area 710 in the semiconductor integrated circuit 700, and first switch areas which are arranged adjacent to the center area of the first layout (as shown by the dashed box in FIG. 8C), rather than in the (0,0) area. In other words, according to various embodiments, by arranging the first switch areas in the logic circuit area, where the macro block and the memory block are not arranged, in the floorplan operation, the inrush peak current may be reduced without repeated execution of simulation.

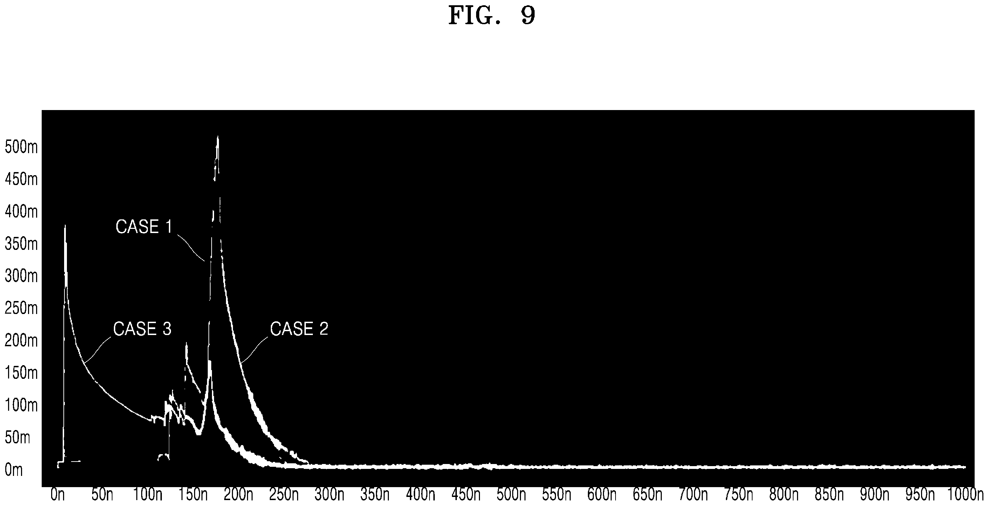

FIG. 9 illustrates a graph for describing current changes in semiconductor integrated circuits, according to comparative examples and to various embodiments.

A first line CASE1 of the graph in FIG. 9 may describe a current change according to the semiconductor integrated circuit 600 in FIG. 8A, a second line CASE2 of the graph in FIG. 9 may describe a current change according to the semiconductor integrated circuit 700 in FIG. 8B, and a third line CASE 3 of the graph in FIG. 9 may describe a current change according to the embodiment of the semiconductor integrated circuit 800 in FIG. 8C.

The horizontal axis of the graphs in FIG. 9 represents time, and the vertical axis thereof represents current intensity. Referring to FIG. 9, the current intensity of the third line CASE 3 is less than the current intensity of the first line CASE 1 and the second line CASE 2.

FIGS. 10 and 11 are block diagrams of design systems 1000 and 2000 of semiconductor integrated circuits, according to embodiments, respectively.

Referring to FIG. 10, the design system 1000 may include a processor 1100, a storage device 1200, a design module 1300, and an analyzer 1400.

Hereinafter, a term "module" may be referred to as software, hardware, for example, a field programmable gate array (FPGA) or an ASIC, or a combination of software and hardware. The "module" may be stored in an addressable storage medium as software, and may also be configured to be executed by one or more processors. In other words, one or more processors may access the addressable storage medium and execute the "module" to implement functionality of the "module." For example, the "module" may include components such as software components, object-oriented software components, class components, and task components, processes, functions, procedures, subroutines, segments of program codes, drivers, firmware, microcode, circuits, data, database, data structures, tables, arrays, and variables. The "module" may also be divided into a plurality of "modules" performing detailed functions.

The processor 1100 may execute the design module 1300 and/or the analyzer 1400 to perform operations. For example, the processor 1100 may include a microprocessor, an application processor (AP), a central processing unit (CPU), a digital signal processor (DSP), a graphics processing unit (GPU), etc. Although only one processor 1100 is illustrated in FIG. 10, embodiments are not limited thereto, and in some embodiments, the design system 1000 may also include a plurality of processors. Although not illustrated in detail, in some embodiments, the processor 1100 may also include a cache memory for improving operation capability.

The storage device 1200 may include a standard cell library (SCL) 1210 and a design rule (DR) 1230. The SCL 1210 and the DR 1230 may be provided from the storage device 1200 to the design module 1300 and/or the analyzer 1400. For example, the SCL 1210 may include information about the standard cells, and the DR 1230 may be used to verify the result of arrangement and routing.

The storage device 1200 may, as a computer-readable storage device, include data and/or a storage medium storing computer-executable commands and/or code. For example, the computer-readable storage medium may include volatile memories, such as static random access memory (RAM) (SRAM), dynamic RAM (DRAM) and non-volatile memory, such as flash memory, magnetic RAM (MRAM), phase change RAM (PRAM), and resistive RAM (RRAM). The computer-readable storage medium may be combined with a computer by being inserted into a computer, or by being integrated inside a computer, or through a communication medium, such as a network and/or a wireless link.

The design module 1300 may include a placer 1310 and a router 1320.

The placer 1310 may, when executed by the processor 1100, arrange a plurality of blocks and a plurality of standard cells based on input data DIN defining a semiconductor integrated circuit and the SCL 1210. The router 1320 may, when executed by the processor 1100, perform signal routing for an arrangement provided by the placer 1310.

The analyzer 1400 may, when executed by the processor 1100, analyze and verify the arrangement and the routing result. When the routing has not been successfully completed as an analysis result, the placer 1310 may modify the existing arrangement and provide the modified arrangement to the router 1320, and the router 1320 may perform again the signal routing for the modified arrangement. When the routing has been successfully completed as an analysis result, the router 1320 may generate output data DOUT defining a semiconductor integrated circuit.

The design module 1300, when executed by the processor 1100, may perform the layout design method of a semiconductor integrated circuit according to various embodiments described above with reference to FIG. 1. For example, the placer 1310 and the router 1320 included in the design module 1300 may, when executed by the processor 1100, perform operations S1000, S2000, S3000, and S4000 in FIG. 1.

According to an embodiment, the placer 1310 and the router 1320 may also be implemented as one integrated module such as the design module 1300. According to an embodiment, the placer 1310 and the router 1320 may be implemented as separated individual modules.

The design module 1300 and/or the analyzer 1400 may be implemented in a software type, but embodiments are not limited thereto. In some embodiments, when both the design module 1300 and the analyzer 1400 are implemented as a software type, the design module 1300 and the analyzer 1400 may be stored as types of code in the storage device 1200. In some embodiments, the design module and the analyzer 1400 may also be stored in as types of code in another storage device (not illustrated) separate from the storage device 1200.

Referring to FIG. 11, the design system 2000 may include a processor 2100, an input/output (I/O) device 2200, a network interface 2300, random access memory (RAM) 2400, read-only memory (ROM) 2500, and a storage device 2600. The processor 2100, the I/O device 2200, the network interface 2300, the RAM 2400, the ROM 2500, and the storage device 2600 may be connected to a bus 2700, and may communicate with each other via the bus 2700. FIG. 11 illustrates a case in which both the design module 1300 and the analyzer 1400 in FIG. 10 are implemented in a software type. Operations included in a method (for example, the method in FIG. 1) of fabricating an integrated circuit according to various embodiments and at least some of operations included in a method (for example, the method in FIG. 1) of designing an integrated circuit may be performed by the design system 2000.

In some embodiments, the design system 2000 may include a computing system. In some embodiments, the design system 2000 may include a fixed computing system, such as a desktop computer, a workstation, and a server. In some embodiments, the design system 2000 may include a portable computing system such as a laptop computer.

The processor 2100 may be substantially the same as the processor 1100 in FIG. 10. For example, the processor 2100 may include a core capable of executing an instruction set (for example, Intel Architecture-32 (IA-32), 64-bit extension IA-32, x86-64, PowerPC, Spark, MIPS, ARM, IA-64, etc.). For example, the processor 2100 may access a memory, that is, the RAM 2400 or the ROM 2500, via the bus 2700, and may execute commands stored in the RAM 2400 or the ROM 2500. As illustrated in FIG. 11, the RAM 2400 may store all or a portion of the programs PR corresponding to the design module 1300 and/or the analyzer 1400 in FIG. 10, and the programs PR may, when executed by the processor 2100, cause the processor 2100 to perform operations for designing the integrated circuit.

In other words, the programs PR may include a plurality of instructions and/or procedures executable by the processor 2100, and the plurality of instructions and/or procedures included in the program PR may, when executed by the processor 2100, control the processor 2100 to perform operations for designing the semiconductor integrated circuit according to various embodiments.

The storage device 2600 may be substantially the same as the storage device 1200 in FIG. 10. The storage device 2600 may store the programs PR, the SCL and the DR, and all or a portion of the programs PR may be loaded from the storage device 2600 to the RAM 2400 before the programs PR are executed by the processor 2100. The storage device 2600 may store files written in program languages, and may also load all or a portion of the programs PR generated by a compiler or the like to the RAM 2400.

The storage device 2600 may store data to be processed by the processor 2100 or data processed by the processor 2100. In other words, the processor 2100 may, according to the program PR, generate new data by processing data stored in the storage device 2600, and may store the generated data in the storage device 2600.

The I/O device 2200 may include an input device, such as a keyboard and a pointing device, and may include an output device, such as a display device and a printer. For example, a user may, by using the I/O device 2200, trigger execution of the programs PR by the processor 2100, input the input data DIN in FIG. 10, and identify the output data DOUT in FIG. 10, and/or an error message, etc.

The network interface 2300 may provide access to a network outside the design system 2000. For example, the network may include a plurality of computing systems and communication links, and the communication links may include wired links, optical links, wireless links, or any other types of links. The input data DIN in FIG. 10 may also be provided to the design system 2000 via the network interface 2300, and the output data DOUT in FIG. 10 may also be provided to another computing system via the network interface 2300.

FIG. 12 is a block diagram illustrating an SoC 3000 according to an embodiment. The SoC 3000 may, as a semiconductor device, include a semiconductor integrated circuit according to various embodiments. The SoC 3000 may be implemented in one chip, in which complex functional blocks such as an IP performing various functions, and active areas, logic cells, and power rails arranged according to various embodiments may be included in each functional block of the SoC 3000.

Referring to FIG. 12, the SoC 3000 may include a modem 3200, a display controller 3300, a memory 3400, an external memory controller 3500, a CPU 3600, a transaction unit 3700, a PMIC 3800, and a GPU 3900, and each of the functional blocks of the SoC 3000 may communicate with each other via a system bus 3100. According to an embodiment, as illustrated in FIG. 12, the PMIC 3800 may be included inside the SoC 3000. In some embodiments, the PMIC 3800 may be provided outside the SoC 3000, similar to the embodiment illustrated with respect to FIG. 3.

The CPU 3600 capable of controlling all operations of the SoC 3000 may control operations of the other functional blocks (for example, 3200, 3300, 3400, 3500, 3700, 3800, and 3900). The modem 3200 may demodulate a signal received from the outside of the SoC 3000, or may modulate a signal generated in the SoC 3000 and transmit the modulated signal to the outside. The external memory controller 3500 may control an operation of transceiving data to and from an external memory device connected to the SoC 3000. For example, programs and/or data stored in the external memory device may be provided to the CPU 3600 or the GPU 3900 under control by the external memory controller 3500. The GPU 3900 may execute program instructions related to graphics processing. The GPU 3900 may receive graphic data via the external memory controller 3500 and may transmit graphic data processed by the GPU 3900 to the outside of the SoC 3000 via the external memory controller 3500. The transaction unit 3700 may monitor data transactions of each functional block, and the PMIC 3800 may control power supplied to each functional block under control by the transaction unit 3700. The display controller 3300 may transmit data generated inside the SoC 3000 to a display by controlling the display (or a display device) outside the SoC 3000.

The memory 3400 may include a non-volatile memory, such as electrically erasable programmable ROM (EEPROM), flash memory, PRAM, RRAM, nano floating gate memory (NFGM), polymer RAM (PoRAM), MRAM, and ferroelectric RAM (FRAM), and a volatile memory, such as DRAM, SRAM, a mobile DRAM, double data rate (DDR) synchronous DRAM (DDR SDRAM), low power DDR (LPDDR) SDRAM, graphic DDR (GDDR) SDRAM, and rambus DRAM (RDRAM).

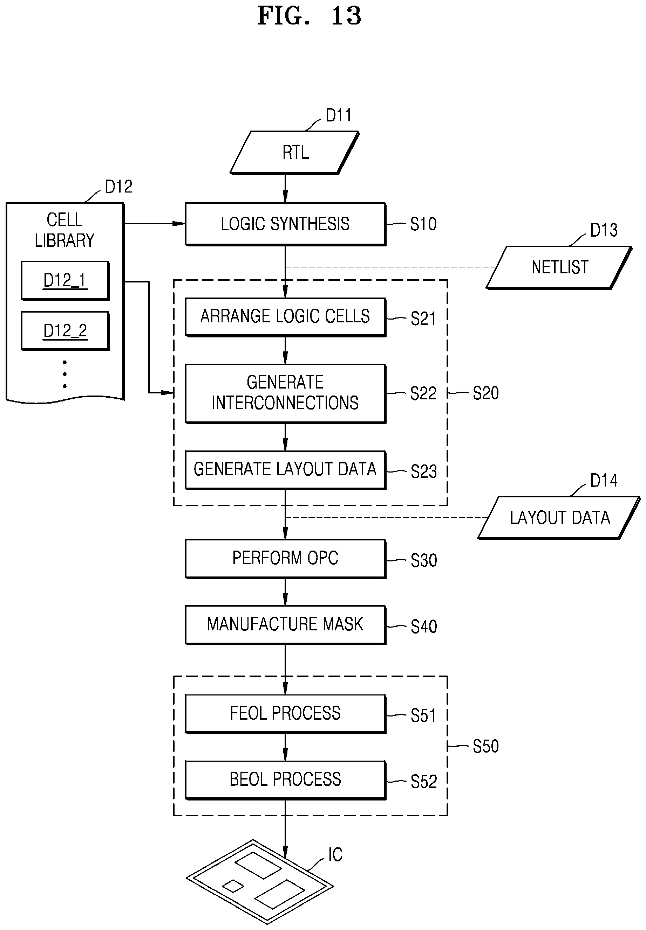

FIG. 13 is a flowchart of a method of fabricating an integrated circuit IC, according to an embodiment.

Referring to FIG. 13, a cell library D12 may include information about logic cells. For example, the logic cells may include function information, characteristics information, layout information, etc. In an embodiment, the cell library D12 may include data, such as D12_1 and D12_2, defining layouts of the logic cells. The logic cells may include standard cells. The standard cells may have a structure complying with a pre-defined standard.

In operation S10, a logic synthesis operation of generating netlist data D 13 from RTL data D11 may be performed. For example, a semiconductor design tool may generate the netlist data D13 including a bitstream or a netlist by performing logical synthesis from the RTL data D11 written in HDL by referring to the cell library D12. The HDL may include VHDL, Verilog, etc. The cell library D12 may include information about a height of a logic cell, the number of pins included in the logic cell, the number of tracks corresponding to the logic cells, etc. In the logical synthesis process, by referring to information about the cell library D12, the logic cells may be included in the integrated circuit IC.

In operation S20, a P&R operation of generating layout data D14 from the netlist data D13 may be performed. The P&R operation S20 may include a plurality of operations S21, S22, and S23.

In operation S21, an operation of arranging the logic cells may be performed. For example, a semiconductor design tool (for example, the P&R tool) may arrange a plurality of logic cells, by referring to the cell library D12, from the netlist data D13. According to an embodiment, in operation S21, an arrangement location of the first switch area may be set, and the first switch area may be arranged as described above with respect to FIGS. 1-12. According to an embodiment, an operation of arranging the power rails may be performed.

In operation S22, an operation of generating interconnections may be performed. By performing the interconnection operation, output pins and input pins of the logic cell may be electrically connected to each other. The logic cell may include at least one via.

In operation S23, an operation of generating the layout data D14 may be performed. The layout data D14 may include geometric information about cells and interconnection of the cells. The layout data D14 may have the same format as GDSII.

In operation S30, optical proximity correction (OPC) may be performed on a layout data D74, and a pattern on a mask may be determined. In other words, by correcting distortion phenomenon, such as refraction due to characteristics of light, from the layout data D74, a pattern having a desired shape may be formed. In some embodiments, a layout of an integrated circuit may be modified on a limited base in operation S30. In this manner, a structure of an integrated circuit may be optimized. Operation S30 may be referred to as design polishing.

In operation S40, an operation of manufacturing a mask may be performed. To form patterns determined in operation S30, at least one mask may be manufactured. A mask may include a photo mask.

In operation S50, an operation of fabricating an integrated circuit may be performed. For example, the integrated circuit may be fabricated by patterning a plurality of layers by using the at least one mask manufactured in operation S40. As illustrated in FIG. 13, operation S50 may include operations S51 and S52.

In operation S51, a front-end-of-line (FEOL) process may be performed. The FEOL process may be referred to as an operation of forming individual elements on a substrate. Individual elements may include transistors, capacitors, resistors, etc. The FEOL process may include an operation of planarizing a wafer, an operation of cleaning a wafer, an operation of forming a trench, an operation of forming a well, an operation of forming a gate line, an operation of forming a source and a drain, etc.

In operation S52, a back-end-of-line (BEOL) process may be performed. The BEOL process may be referred to as a process of interconnecting individual elements. For example, the BEOL process may include an operation of silicidating a gate, source and drain, an operation of adding a dielectric material, an operation of planarizing, an operation of forming holes, an operation of adding metal layers, an operation of forming vias, an operation of forming a passivation layer, etc.

After operation S52 is completed, the packaged integrated circuit IC may be used as a component of various applications.

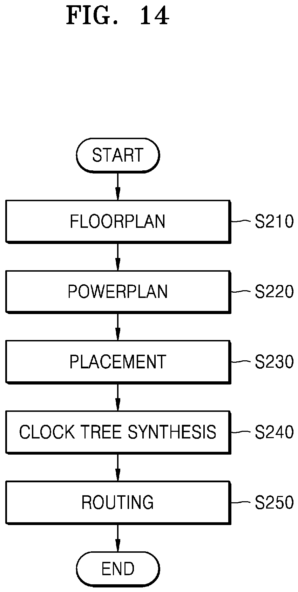

FIG. 14 is a detailed flowchart illustrating a layout design operation, according to an embodiment.

A method of designing the layout of a schematic circuit may include a method of arranging/designing manually and directly by a designer or a method of designing by using electronic design automation (hereinafter, EDA). Hereinafter, only a layout design operation of a semiconductor device using the EDA is described.

Referring to FIG. 14, the layout design operation may include a floorplan operation S210, a powerplan operation S220, a placement operation S230, a clock tree synthesis (CTS) operation S240, and a routing operation S250. According to an embodiment, operations in FIG. 14 may be included in operation S20 in FIG. 13.

The floorplan operation S210 may include cutting and moving a logically designed schematic circuit, and generating a physical design, that is, an arrangement pattern of memories or function blocks for substantial fabrication. An operation of arranging the first switch area according to an embodiment described above with respect to FIGS. 1-12 may be included in the floorplan operation S210.

The powerplan operation S220 may include generating an arrangement pattern of the wires connecting the arranged function blocks to local power (for example, a driving voltage) or ground. For example, the arrangement pattern of the wires connecting the power source or the ground to the arranged function blocks may be generated so that power is evenly supplied to the entire chip in a net form.

The placement operation S230 may include generating the arrangement pattern of elements constituting the function block.

The CTS operation S240 may include an operation of generating the arrangement pattern of signal lines of a center clock related to a response time determining the performance of the semiconductor device.

The routing operation S250 may include an operation of generating the arrangement pattern of general signal lines. The general signal lines may be signal lines transmitting general control signals, input signals, or output signals, which are not pre-routing lines.

While various embodiments have been particularly shown and described with reference to the drawings, it will be understood that various changes in form and details may be made therein without departing from the scope of the following claims.

## Claims

1. A layout design method comprising:
receiving input data defining a semiconductor integrated circuit;
performing an arrangement operation and a routing operation based on the input data to obtain a first layout of the semiconductor integrated circuit including a plurality of blocks;
setting, on the first layout, a first switch area in which a plurality of first switches are to be arranged; and
arranging the plurality of first switches in the first switch area, and arranging a plurality of second switches in a second switch area that is different from the first switch area to obtain a second layout of the semiconductor integrated circuit.

2. The layout design method of claim 1,
wherein the first switch area is configured to apply power to a portion of the plurality of blocks, and
wherein the second switch area is configured to apply power to a remainder of the plurality of blocks.

3. The layout design method of claim 2,
wherein a first switch among the plurality of first switches included in the first switch area is configured to receive a first signal, and to be turned on based on the first signal, and
wherein a second switch among the plurality of second switches included in the second switch area is configured to receive a second signal, and to be turned on based on the second signal.

4. The layout design method of claim 3, wherein setting the first switch area comprises:
setting the first switch area as a logic circuit area in which the plurality of blocks are not arranged.

5. The layout design method of claim 3 or 4, wherein setting the first switch area comprises:
setting an area except for a first edge area, a second edge area, a third edge area, and a fourth edge area of the first layout.

6. The layout design method of claim 5,
wherein the first edge area, the second edge area, the third edge area, and the fourth edge area correspond to a first vertex, a second vertex, a third vertex, and a fourth vertex of the first layout, respectively.

7. The layout design method of any of claims 3 to 6, wherein setting the first switch area comprises:
setting an area close to a center area of the first layout.

8. The layout design method of any preceding claim, wherein setting the first switch area comprises:
setting a plurality of first switch areas.

9. The layout design method of any preceding claim, wherein performing the arrangement operation and the routing operation based on the input data to obtain the first layout comprises:
performing a floorplan operation on the plurality of blocks;
performing a powerplan operation on a plurality of power wires;
performing a placement operation on elements included in the plurality of blocks;
performing a clock tree synthesis (CTS) operation on a clock signal provided to the elements; and
performing the routing operation on an element signal provided to the elements.

10. The layout design method of any preceding claim, wherein the semiconductor integrated circuit is a system on chip (SoC).

11. A semiconductor integrated circuit comprising:
a power management integrated circuit (PMIC) configured to generate power; and
a system on chip (SoC) configured to operate according to the power from the PMIC,
wherein the SoC comprises:
an element area in which a macro block and a memory block are arranged; and
a logic circuit area in which a plurality of switches are arranged, the plurality of switches capable of controlling power that is applied to the macro block and the memory block,
wherein the logic circuit area comprises:
a first switch area in which a plurality of first switches are arranged for reducing inrush current applied to the element area; and
a second switch area in which a plurality of second switches are arranged, the plurality of second switches controlling all power applied to the element area, and
wherein the first switch area is arranged in an area of the SoC except for a first edge area, a second edge area, a third edge area, and a fourth edge area of the SoC.

12. The semiconductor integrated circuit of claim 11, wherein the first switch area is arranged adjacent to a center area of the SoC.

13. The semiconductor integrated circuit of claim 11 or 12, wherein the first switch area comprises a plurality of first switch areas.

14. The semiconductor integrated circuit of claim 11, 12 or 13, wherein a number of the plurality of first switches included in the first switch area is less than a number of the plurality of second switches included in the second switch area.

15. The semiconductor integrated circuit of any of claims 11 to 14,
wherein the first edge area, the second edge area, the third edge area, and the fourth edge area correspond to a first vertex, a second vertex, a third vertex, a fourth vertex of the SoC, respectively.
